(19) Europäisches Patentamt
European Patent Office
Office européen des brevets

(11) **EP 2 061 957 B1**

(12) **EUROPÄISCHE PATENTSCHRIFT**

(45) Veröffentlichungstag und Bekanntmachung des Hinweises auf die Patenterteilung:
**31.03.2010 Patentblatt 2010/13**

(51) Int Cl.:
***F01N 3/20*** *(2006.01)*  ***B01D 53/26*** *(2006.01)*
***B01D 53/94*** *(2006.01)*

(21) Anmeldenummer: **07802197.9**

(22) Anmeldetag: **07.09.2007**

(86) Internationale Anmeldenummer:
**PCT/EP2007/007805**

(87) Internationale Veröffentlichungsnummer:
**WO 2008/031533 (20.03.2008 Gazette 2008/12)**

(54) **VERFAHREN ZUM BETREIBEN EINES SCR-KATALYSATORS SOWIE SCR-KATALYSATORSYSTEM**

METHOD FOR OPERATING AN SCR CATALYST AND SCR-CATALYST SYSTEM

PROCÉDÉ D'UTILISATION D'UN CATALYSEUR SCR ET SYSTÈME DE CATALYSEUR SCR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **14.09.2006 DE 102006043954**

(43) Veröffentlichungstag der Anmeldung:
**27.05.2009 Patentblatt 2009/22**

(73) Patentinhaber: **VOLKSWAGEN AG**
**38436 Wolfsburg (DE)**

(72) Erfinder:
• **HERR, Andreas**
**38442 Fallersleben (DE)**
• **HORN, André**
**19258 Boizenburg (DE)**
• **WENDENBURG, Stefan**
**38550 Isenbüttel (DE)**
• **GOTTSCHLING, Martina**
**38106 Braunschweig (DE)**
• **BRÖMER, Arne**
**38531 Rötgesbüttel (DE)**
• **BULLERT, Jörn**
**76593 Gernsbach (DE)**

(74) Vertreter: **Gulde Hengelhaupt Ziebig & Schneider**
**Patentanwälte - Rechtsanwälte**
**Wallstraße 58/59**
**10179 Berlin (DE)**

(56) Entgegenhaltungen:
EP-A- 0 615 777  EP-A- 1 048 340
EP-A- 1 048 360  EP-A- 1 338 562
WO-A-99/01205  DE-A1- 10 251 498
DE-A1-102005 055 845

**Beschreibung**

Die Erfindung betrifft ein Verfahren sowie einen Programmalgorithmus zum Betreiben eines in einer Abgasanlage einer Verbrennungskraftmaschine, insbesondere eines Dieselmotors, angeordneten Katalysators, der nach dem SCR-Verfahren (SCR = Selectiv Catalytic Reduction) arbeitet. Bei diesem Verfahren werden im Abgas der Verbrennungskraftmaschine enthaltene Stickoxide ($NO_x$) unter Beteiligung eines chemischen Reduktionsmittels, das im Reduktionskatalysator gespeichert wird, reduziert.

Neben Kohlenmonoxid (CO) und Kohlenwasserstoffen (HC) gehören insbesondere Stickoxide ($NO_x$) zu den umweltgefährdenden, direkt emittierten Primärschadstoffen, die beim Betrieb von Verbrennungsmotoren, insbesondere Dieselmotoren, entstehen. Ein Einsatz von Drei-Wege-Katalysatoren, wie sie bei $\lambda = 1$ geregelten Ottomotoren verwendet werden, ist auf Grund des Sauerstoffüberschusses im sehr mageren dieselmotorischen Abgas nicht möglich. Aus diesem Grunde wurden zur Reduktion der Stickoxidemission bei Dieselmotoren selektiv arbeitende SCR-Katalysatoren entwickelt, die mit einem zugeführten Reduktionsmittel Stickoxide ($NO_x$) zu $N_2$ und $H_2O$ reduzieren. Als Reduktionsmittel dient insbesondere Ammoniak ($NH_3$), das dem Abgas als Gas oder als wässrige Lösung zugeführt wird. Auf Grund des nicht ungefährlichen Umgangs mit $NH_3$ wird heute üblicherweise Harnstoff als chemische Vorstufe eingesetzt, der entweder in Form einer wässrigen Lösung oder als Feststoff vorliegt. Die thermohydrolytische Aufspaltung von Harnstoff unter Freisetzung von $NH_3$ erfolgt durch die Wärme des Abgasstroms bzw. des Katalysators oder in einem Verdampfer. Die vorliegende Anmeldung bezieht sich auf solche SCR-Systeme, bei denen fester Harnstoff als Reduktionsmittelvorstufe eingesetzt wird.

Es sind verschiedene Dosier- und Fördersystem zur Dosierung und Förderung fester Harnstoff-Pellets aus einem Vorratsbehälter, in welchem der Harnstoff bevorratet wird, bekannt. So beschreibt DE 102 51 498 A ein luftunterstütztes Förderverfahren, bei dem die Pellets aus dem Vorratsbehälter mittels einer in Abhängigkeit von einer Motorlast rotierenden Lochscheibe dosiert und über eine Druckluftdüse einem Reaktor zugeführt werden, wo der Harnstoff thermisch zu Ammoniak umgewandelt wird. Vom Reaktor aus wird das Ammoniak in den Abgaskanal stromauf des SCR-Katalysators eingespeist. Aus DE 10 2004 029 387 A und DE 10 2004 042 225 A ist ein Verfahren bekannt, bei dem die Harnstoff-Pellets über ein Förderband dosiert und mittels elektromechanischem Verfahren auf hohe Geschwindigkeit beschleunigt werden, so dass sie im Ammoniak-Reaktor zerschellen und dort umgesetzt werden.

Im Betrieb des Abgasnachbehandlungssystems liegt in der Abgasanlage immer ein Überdruck gegenüber der Umgebungsatmosphäre und zunächst auch gegenüber dem Harnstoffvorrats- und -fördersystem vor. Daher wird im Wege des Druckausgleichs beim Startvorgang der Verbrennungskraftmaschine und auch bei Druckänderungen in der Abgasanlage immer ein gewisser Luftaustausch stattfinden, wobei eine Eintragung von Luftfeuchtigkeit in den Harnstoff erfolgt. Aufgrund seiner hygroskopischen Eigenschaft nimmt Harnstoff ab einer kritischen relativen Luftfeuchtigkeit Wasser auf, so dass der Harnstoff verkleben kann und nicht mehr rieselfähig ist. Neben der Adsorption von Luftfeuchtigkeit durch Harnstoff kann es in bestimmten Betriebssituationen aber auch zu einer Kondensation von Wasser im Vorratsbehälter kommen. Dies kann insbesondere bei starker Abkühlung des Systems nach Abstellen des Fahrzeugs oder bei Inbetriebnahme bei niedrigen Umgebungstemperaturen infolge des Druckanstiegs erfolgen, da in beiden Fällen die relative Luftfeuchtigkeit bis 100 % ansteigen kann. Auch hierbei erfolgt ein Verkleben des Harnstoffs. Hierdurch kann die Betriebssicherheit des SCR-Katalysatorsystems gefährdet werden.

Zur Vermeidung der Wasserabsorption durch den Harnstoff schlägt EP 1 048 340 A vor, Silicagel als Trockenmittel in dem Harnstoff-Vorratsbehälter vorzusehen, das Luftfeuchtigkeit absorbiert und somit den Harnstoff rieselfähig hält. Nachteilig an diesem Ansatz ist die begrenzte Aufnahmefähigkeit des Trockenmittels für Wasser, so dass es von Zeit zu Zeit ersetzt werden muss.

Aufgabe der vorliegenden Erfindung ist es daher, ein verbessertes Verfahren zum Betreiben eines SCR-Katalysators zur Verfügung zu stellen, bei dem eine übermäßige Aufnahme von Wasser durch den Harnstoff im Vorratsbehälter vermieden und somit die Betriebssicherheit der Abgasreinigungsanlage gewährleistet wird. Es soll ferner ein zur Durchführung des Verfahrens geeignetes SCR-Katalysatorsystem vorgeschlagen werden.

Diese Aufgabe wird gelöst durch ein Verfahren sowie ein SCR-Katalysatorsystem mit den Merkmalen der unabhängigen Ansprüche. Dabei wird zumindest ein Teilstrom einer in den Vorratsbehälter für das Reduktionsmittel oder seiner chemischen Vorstufe, insbesondere Harnstoff, einströmenden Luft oder eine in dem Vorratsbehälter vorliegende Luft derart konditioniert, dass zumindest ihre spezifische Luftfeuchtigkeit und optional zusätzlich ihre relative Luftfeuchtigkeit abgesenkt wird. Erfindungsgemäß wird die spezifische und damit relative Luftfeuchtigkeit im Vorratsbehälter erniedrigt, indem die diesem zugeführte Luft vor ihrem Eintritt in den Vorratsbehälter bzw. in das Förder- und Dosiersystem gekühlt und/oder komprimiert wird, so dass der Taupunkt erreicht wird und durch Kondensation Wasser entzogen wird, das heißt die Luft entfeuchtet wird. Bei anschließender betriebsbedingter Erwärmung im Vorratsbehälter kommt es dann zu einer weiteren Abnahme der relativen Luftfeuchtigkeit der so vorgetrockneten Luft. Auf diese Weise wird der Luftzustand so beeinflusst, dass eine Adsorption von Wasser durch den Harnstoff vermindert oder sogar gänzlich unterbunden wird, so dass ein Verkleben des Harnstoffs vermieden und seine Rieselfähigkeit erhalten bleibt. Insbesondere wird die spezifische und gegebenenfalls die relative Luftfeuchtigkeit unterhalb eines (temperatur- und druckabhängigen) kritischen Wertes abgesenkt, oberhalb dessen eine Wasseraufnahme von Harnstoff erfolgt. Dabei ist die relative Luftfeuchtigkeit definiert als das prozentuale Verhältnis des aktuellen Wasserdampfdrucks und dem Sättigungsdampfdruck, das heißt dem bei der gegebenen Temperatur maximal möglichen Sättigungsdampfdruck. Die spezifische Luftfeuchtigkeit (oder Wasserdampfgehalt) hingegen gibt die prozentuale, auf eine bestimmt Masse feuchter Luft bezogene Masse Wasser an.

Im Rahmen des erfindungsgemäßen Verfahrens können folgende Parameter der Luft beeinflusst werden, die letztlich alle zur Absenkung der relativen Luftfeuchtigkeit im Vorratsbehälter führen: Absenkung der absoluten Feuchte (bzw. der spezifischen Luftfeuchtigkeit), die in den Vorratsbehälter einströmt; optional zusätzlich Anhebung der Temperatur im Vorratsbehälter und/oder Absenkung des Drucks im Vorratsbehälter.

Nach einer bevorzugten Ausgestaltung des Verfahrens erfolgt die Absenkung der spezifischen Luftfeuchtigkeit durch Entfeuchtung der Luft mittels Kondensation zumindest eines Teils des in der Luft enthaltenen Wassers, wofür eine dem Vorratsbehälter zuzuführende Luft insbesondere an einem von einem kalten Medium durchströmten Wärmetauscher so weit abgekühlt wird, dass der maximale Sättigungsdampfdruck (Taupunkt) erreicht wird und sich flüssiges Wasser abschlägt. Andere Methoden der Entfeuchtung durch Wasserentzug sind jedoch im Rahmen der Erfindung ebenso einsetzbar. In diesem Zusammenhang ist besonders bevorzugt vorgesehen, den Vorratsbehälter mit einer durch eine Klimaanlage entfeuchteten Luft zu versorgen, wobei vorzugsweise eine Abluft einer ohnehin für die Klimatisierung des Fahrzeuginnenraums vorhandene Klimaanlage zur Belüftung des Vorratsbehälters genutzt wird. Klimaanlagen kühlen die Luft typischerweise auf eine Temperatur von etwa 8 °C, wobei die relative Luftfeuchtigkeit ansteigt. In Abhängigkeit von der Umgebungsluftfeuchtigkeit wird dabei 100 % relative Luftfeuchtigkeit erreicht, wobei Wasser kondensiert und somit die Luft entfeuchtet wird. Durch direkte Entnahme der Luft aus der Fahrzeugklimaanlage wird somit der Vorratsbehälter mit einer Luft versorgt, deren absolute bzw. spezifische Luftfeuchtigkeit bereits gegenüber der Umgebungsluft abgesenkt ist.

In besonders bevorzugter Ausgestaltung erfolgt die Absenkung der spezifischen Luftfeuchtigkeit (Entfeuchtung) der zuzuführenden Luft vor ihrem Eintritt in den Vorratsbehälter zwei- oder mehrstufig durch Kombination der zuvor beschriebenen Maßnahmen. Insbesondere wird eine durch eine Fahrzeugklimaanlage konditionierte (entfeuchtete und gekühlte) Luft eingesetzt und diese in einem zweiten Schritt vor Eintritt in den Vorratsbehälter und/oder das Dosier- und Fördersystem durch weitere Abkühlung und/oder Kompression noch stärker entfeuchtet.

Eine zusätzliche im Rahmen der vorliegenden Erfindung einsetzbare Maßnahme zur Absenkung der spezifischen Luftfeuchtigkeit stellt der Einsatz eines Adsorptionsmittels für Wasser dar. Dieses kann innerhalb des Vorratsbehälters, beispielsweise in luftdurchlässigen Kartuschen, oder in einer Luftzuleitung des Vorratsbehälters angeordnet sein. Als Adsorptionsmittel kommen insbesondere Molekularsiebe, Silicagel, Aktivkohle oder eine Kombination von diesen in Frage. Auch diese Maßnahme kann vorteilhaft mit den oben genannten Maßnahmen kombiniert werden. Da jedes Adsorptionsmittel nur eine endliche Beladungskapazität für Wasser aufweist, sollte dessen Einsatz so effektiv wie möglich gestaltet werden. Hier ist besonders vorteilhaft vorgesehen, das Adsorptionsmittel nur diskontinuierlich einzusetzen. Insbesondere kann vorgesehen sein, die Maßnahmen zur Luftkonditionierung nur bei Unterschreiten einer adsorptionsmittelspezifisch vorbestimmten Temperaturschwelle im Vorratsbehälter und/oder dem Einbauort des Adsorptionsmittels durchzuführen. Ferner kann die externe Luftentfeuchtung gesperrt werden, wenn die Beladungskapazität erschöpft ist.

Während die zuvor diskutierten Maßnahmen auf eine Entfeuchtung der dem Vorratsbehälter und/oder dem Dosier- und Fördersystem zuströmenden Luft gerichtet sind, das heißt auf eine Entfernung von Wasser aus der Luft und damit einer Absenkung der absoluten oder spezifischen Luftfeuchtigkeit, zielen optionale zusätzliche Maßnahmen auf die Herabsetzung der relativen Luftfeuchtigkeit im Vorratsbehälter und/oder dem Dosier- und Fördersystem ab. Da die relative Luftfeuchtigkeit (in einem konstanten Volumen) mit zunehmender Temperatur und abnehmendem Druck sinkt, sieht eine weitere Ausgestaltung des Verfahrens vor, durch Erhöhung der Lufttemperatur und/oder durch Absenkung des Luftdrucks innerhalb des Vorratsbehälters und/oder des Dosier- und Fördersystems eine Erniedrigung der relativen Luftfeuchtigkeit über dem Reduktionsmittel (Harnstoff) zu erzielen. Diese Maßnahmen können in Kombination mit der Zuführung einer (beispielsweise durch die Klimaanlage) entfeuchteten Luft eingesetzt werden. Eine in diesem Zusammenhang bevorzugte Ausgestaltung sieht vor, den Luftdruck im Vorratsbehälter bei ausgeschalteter Verbrennungskraftmaschine beispielsweise durch eine Vakuumpumpe oder einen saugseitig angeschlossenen Verdichter abzusenken. Eine zu diesem Zweck erforderliche Verschlusseinrichtung zur Unterbindung des Luftaustauschs kann etwa in einer Verbindungsleitung zwischen Vorratsbehälter und dem Abgaskanal vorgesehen sein und beispielsweise in Form eines Ventils oder eines modifizierten Zellenrads, bei dem eine oder mehrere geöffnete Zellen durch Verschlusszellen ersetzt werden, ausgestaltet sein.

Insbesondere beim Einsatz eines Adsorptionsmittels für Wasser mit begrenzter Kapazität oder beim Betrieb kraftstoffverbrauchender Einrichtungen, etwa eines Kompressors oder einer Pumpe zur Veränderung des Drucks oder einer Heiz- oder Kühleinrichtung zur Veränderung der Temperatur; wird entsprechend einer bevorzugten Ausführung die Luft des Vorratsbehälters und/oder des Dosier- und Fördersystems nur diskontinuierlich mit den erfindungsgemäßen Maßnahmen zur Reduzierung der Luftfeuchtigkeit konditioniert. In diesem Zusammenhang kann vorteilhaft vorgesehen sein, nur die für den Druckaufbau im Vorratsbehälter und/oder im Dosier- und Fördersystem erforderliche Luftmenge zu behandeln, wobei besonders bevorzugt ist, dies nur beim Fahrzeugstart durchzuführen. Nach Aufbau des angestrebten Druckniveaus wird die Behandlung der Luft eingestellt und der Druck durch geeignete Absperrmaßnahmen auch bei Fahrzeugstillstand gehalten.

Es kann ferner vorteilhaft vorgesehen sein, den Harnstoff in Form von Harnstoff-Pellets einzusetzen, die eine die Feuchtigkeitsadsorption von Harnstoff herabsetzende Beschichtung aufweisen.

Ein weiterer Aspekt der Erfindung betrifft ein zur Durchführung des erfindungsgemäßen Verfahrens geeignetes SCR-Katalysatorsystem für eine Abgasanlage einer Verbrennungskraftmaschine umfassend einen SCR-Katalysator, der geeignet ist, ein Reduktionsmittel zu speichern und unter dessen Beteiligung Stickoxide $NO_x$ des Abgases zu reduzieren, einen Vorratsbehälter zur Lagerung des Reduktionsmittels oder einer chemischen Vorstufe von diesem und ein Dosier- und Fördersystem zur Zuführung des Reduktionsmittels oder seiner chemischen Vorstufe zu dem SCR-Katalysator. Wird eine chemische Vorstufe des Reduktionsmittels eingesetzt, ist üblicherweise noch eine Aufbereitungsvorrichtung zur Freisetzung des Reduktionsmittels zwischen Dosier- und Fördersystem und dem SCR-Katalysator geschaltet. Das SCR-Katalysatorsystem weist Mittel auf zur Konditionierung zumindest eines Teilstroms einer in den Vorratsbehälter einströmenden Luft oder einer in dem Vorratsbehälter vorliegenden Luft derart, dass zumindest die spezifische und optional zusätzlich die relative Luftfeuchtigkeit der Luft abgesenkt wird. Erfindungsgemäß sind die Mittel zur Konditionierung der Luft ausgebildet, durch Kühlung und/oder durch Kompression der Luft vor Eintritt in den Vorratsbehälter und/oder in das Dosier- und Fördersystem bis zum Erreichen des Taupunktes der Luft die Absenkung der spezifischen Luftfeuchtigkeit zu bewirken.

Des Weiteren kann das System einen im Vorratsbehälter angeordneten Drucksensor aufweisen, welcher der Erfassung und Regelung des Druckaufbaus dient. Es kann ferner ein Sensor im Vorratsbehälter vorgesehen sein, beispielsweise ein Temperatur-Feuchtefühler, der die relative Luftfeuchtigkeit misst, so dass bei Erreichen der kritischen Luftfeuchtigkeitsgrenze, oberhalb der der Harnstoff Wasser absorbiert, eine oder mehrere der erfindungsgemäßen Maßnahmen zur Reduzierung der relativen Luftfeuchtigkeit ergriffen werden.

Weitere vorteilhafte Ausgestaltungen der Erfindung sind Gegenstand der übrigen Unteransprüche.

Die Erfindung wird nachfolgend in Ausführungsbeispielen anhand der zugehörigen Zeichnungen näher erläutert. Es zeigen:

Figur 1      eine Verbrennungskraftmaschine mit nachgeschalteter Abgasanlage gemäß einer vorteilhaften Ausgestaltung der Erfindung;

Figur 2A     ein Dosier- und Fördersystem eines SCR-Katalysatorsystems gemäß einer ersten vorteilhaften Ausgestaltung der Erfindung;

Figur 2B     ein Dosier- und Fördersystem eines SCR-Katalysatorsystems gemäß einer zweiten vorteilhaften Ausgestaltung der Erfindung;

Figur 2C     ein Dosier- und Fördersystem eines SCR-Katalysatorsystems gemäß einer drittem vorteilhaften Ausgestaltung der Erfindung;

Figur 3      relative Luftfeuchtigkeit im Harnstoff-Vorratsbehälter, bei einer Luftversorgung mit Luft aus der Klimaanlage;

Figur 4      relative Luftfeuchtigkeit im Harnstoff-Vorratsbehälter, bei einer Luftversorgung mit Luft aus der Klimaanlage nach weiterer Entfeuchtung durch Temperaturabsenkung;

Figur 5      relative Luftfeuchtigkeit im Harnstoff-Vorratsbehälter, bei einer Luftversorgung mit Luft aus der Klimaanlage nach weiterer Entfeuchtung durch Druckerhöhung;

Figur 6      Adsorptionsisothermen von Silicagel in Abhängigkeit von der absoluten Luftfeuchtigkeit;

Figur 7      zur Befüllung des Vorratsbehälters notwendige Luftmasse in Abhängigkeit von der Druckänderung sowie dem freien Volumen des Vorratsbehälters;

Figur 8      Anzahl möglicher Startvorgänge bei einem Einsatz von 250 g Silicagel;

Figur 9      Anzahl möglicher Startvorgänge bei einem Einsatz von 500 g Silicagel;

Figur 10     relative Luftfeuchtigkeit im Harnstoff-Vorratsbehälter, bei einer Luftversorgung mit Luft aus der Klimaanlage nach weiterer Entfeuchtung durch Silicagel und

Figur 11    Druckabnahme im Vorratsbehälter 22 bei Abkühlung.

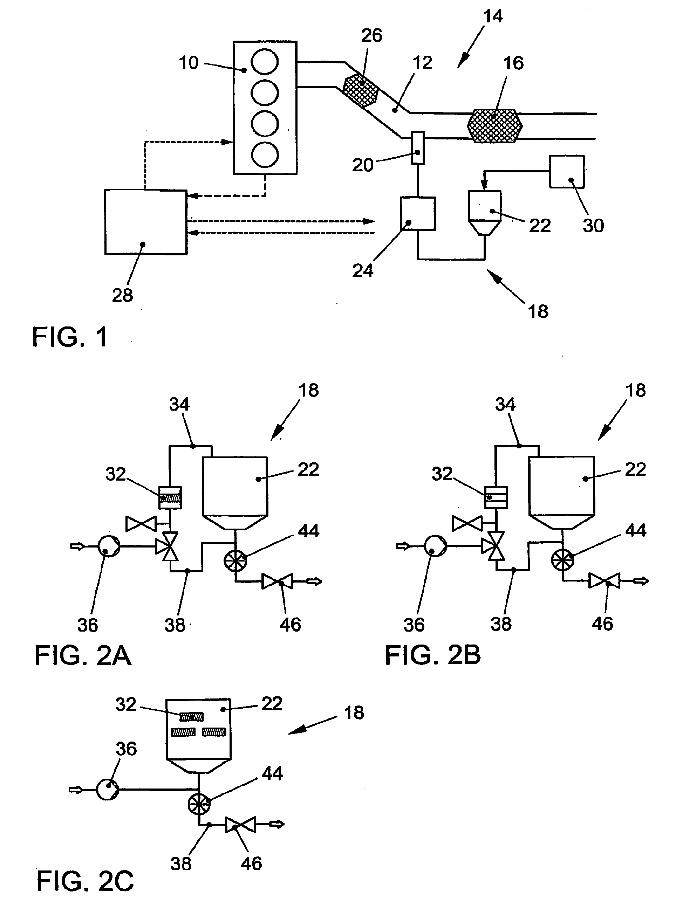

Figur 1 zeigt eine Verbrennungskraftmaschine 10, die hier insbesondere ein Dieselmotor ist. Ein von der Verbrennungskraftmaschine 10 kommendes Abgas wird in einen Abgaskanal 12 einer Abgasanlage geleitet. Die Abgasanlage umfasst verschiedene Komponenten zur Abgasnachbehandlung, insbesondere ein insgesamt mit 14 bezeichnetes SCR-Katalysatorsystem, das einen im Abgaskanal 12 angeordneten SCR-Katalysator 16 sowie ein außerhalb des Abgaskanals 12 angeordnetes Dosier- und Fördersystem 18 aufweist. Bei dem SCR-Katalysator 16 handelt es sich um einen Reduktionskatalysator, der ein Reduktionsmittel, hier Ammoniak ($NH_3$), speichert und unter dessen Beteiligung Stickoxide ($NO_x$) des Abgases zu $N_2$ und $H_2O$ umsetzt. Das Reduktionsmittel $NH_3$ wird beispielsweise als Gas über eine Zudosiereinheit 20, stromauf des SCR-Katalysators 16 in den Abgaskanal 14 eingedüst und in dem SCR-Katalysator 16 gespeichert. Das Dosier- und Fördersystem 18 umfasst einen Vorratsbehälter 22, welcher der Vorhaltung von Festharnstoff als chemische Vorstufe von Ammoniak beispielsweise in Form von Pellets oder Prills dient. Über eine hier nicht dargestellte Dosiereinrichtung wird der Harnstoff dosiert und einem Ammoniak-Reaktor 24 zugeführt, der thermisch eine Konvertierung von Harnstoff zu gasförmigem Ammoniak vornimmt. Dies kann durch eine mechanische Aufbereitung der Harnstoff-Pellets unterstützt werden. Der Reaktor 24 kann - abweichend von der dargestellten Ausführung - auch innerhalb des Abgaskanals 12 angeordnet sein.

Stromauf des SCR-Katalysators 16 ist ein Oxidationskatalysator 26 im Abgaskanal 14 angeordnet, der eine Konvertierung von Kohlenmonoxid (CO) und Kohlenwasserstoffen (HC) vornimmt. Die Anordnung des Oxidationskatalysators 26 vor dem SCR-Katalysator 16 ist besonders vorteilhaft, da hierdurch insbesondere im niedrigen Temperaturbereich die Aktivität des SCR-Katalysators 16 deutlich verbessert wird. Optimal ist in diesem Zusammenhang, wenn durch die Oxidation von NO ein $NO_2$-Anteil von etwa 50 % bezogen auf die gesamten Stickoxide $NO_x$ hinter dem Oxidationskatalysator 26 erzeugt wird. Zudem wird durch den vorgeschalteten Oxidationskatalysator 26 eine Deaktivierung des SCR-Katalysators 16 infolge erhöhter HC-Emissionen vermieden, die besonders bei niedrigen Temperaturen ausgeprägt ist. Des Weiteren kann stromauf oder stromab des SCR-Katalysators 16 ein Partikelfilter angeordnet sein, der Rußpartikel des Abgases filtert und von Zeit zu Zeit thermisch regeneriert wird. Alternativ kann der Partikelfilter mit einem integrierten Oxidationskatalysator dem SCR-Katalysator 16 vorgeschaltet sein. Ferner kann stromab des SCR-Katalysators 16 ein weiterer Oxidationskatalysator vorgesehen sein, der eine Oxidation von austretendem $NH_3$ bewirkt.

Der Abgaskanal 12 kann zudem hier nicht dargestellte Gas- und/oder Temperatursensoren beherbergen, beispielsweise eine oder mehrere Lambdasonden, die in bekannter Weise der Lambdaregelung (im Falle von Ottomotoren mit nachgeschaltetem 3-Wege-Katalysator) der Verbrennungskraftmaschine 10 dienen, sowie ein dem SCR-Katalysator 16 nachgeschalteter $NO_x$-Sensor und andere. Die Signale der Sensoren gehen in eine Motorsteuerung 28 ein. Weiterhin werden von der Motorsteuerung 28 verschiedene Betriebsparameter der Verbrennungskraftmaschine 10 erfasst, beispielsweise Motordrehzahl, Kühlmitteltemperatur oder ein Pedalwert des Fahrpedals. In Abhängigkeit von den eingehenden Parametern steuert die Motorsteuerung 28 den Betrieb des Motors 10, beispielsweise Kraftstoffeinspritzmengen und Einspritzzeitpunkte, die Luftzufuhr sowie den Betrieb des SCR-Katalysatorsystems 16, insbesondere die Reduktionsmittelzudosierung. Die Steuereinheit 28 beinhaltet zu diesem Zweck verschiedene Programmalgorithmen sowie hierfür notwendige Kennfelder. Entsprechende Signal- und Steuerleitungen sind vorliegend durch unterbrochene Linien dargestellt.

Problematisch bei der Verwendung von Harnstoff - auch in Form von Pellets - ist seine hygroskopische Eigenschaft, das heißt seine Neigung, Wasser aufzunehmen und infolgedessen zu verkleben, wodurch seine Riesel- und Förderfähigkeit stark herabgesetzt wird. Im Betrieb der Abgasanlage liegt immer ein gewisser Überdruck im Abgaskanal 12 gegenüber dem Umgebungsdruck vor. Im Wege des Druckausgleichs stellt sich dieser Druck auch im Dosier- und Fördersystem 18 sowie im Vorratbehälter 22 ein, so dass immer ein gewisser Feuchtigkeitseintrag in den Harnstoffvorratsbehälter stattfindet. Erfindungsgemäß ist nun vorgesehen, Maßnahmen zur Absenkung zumindest der spezifischen und optional zusätzlich der relativen Luftfeuchtigkeit zu ergreifen, so dass möglichst eine kritische relative Luftfeuchtigkeit unterschritten wird, oberhalb welcher Harnstoff Wasser adsorbiert. Hierfür wird einerseits die spezifische Luftfeuchtigkeit der in das Dosier- und Fördersystem 18, insbesondere in den Vorratsbehälter 22, einströmenden Luft gesenkt (und damit den absoluten Feuchtigkeitseintrag) und als optionale zusätzliche Maßnahme die relative Luftfeuchtigkeit innerhalb des Vorratsbehälters 22. Zur Realisierung des ersten Zwecks ist gemäß dem vorliegenden Ausführungsbeispiel eine Klimaanlage 30 angedeutet, die idealerweise eine zur Ausstattung des Fahrzeugs gehörende Fahrzeugklimaanlage ist und deren konditionierte Luft vorliegend zur Versorgung des Vorratsbehälters 22 und des Dosier- und Fördersystems 18 dient, nämlich zum Druckausgleich sowie als Förderluft zur Beförderung der Harnstoff-Pellets.

Klimaanlagen kühlen Luft (zur Versorgung des Fahrzeuginnenraums) typischerweise auf etwa 8 °C, indem die Luft durch ein von einem Kühlmittel durchströmten Wärmetauscher geleitet wird. In Abhängigkeit von der Umgebungsluftfeuchtigkeit kann dabei die relative Luftfeuchtigkeit einen Wert von r = 100 % erreichen, das heißt, Wasser kondensiert und wird somit der Luft entzogen. Auf diese Weise findet eine Luftentfeuchtung (Abnahme der spezifischen Luftfeuchtigkeit) statt.

Die relative Luftfeuchtigkeit ist temperatur- und druckabhängig. Die im Vorratsbehälter vorliegende relative Luftfeuchtigkeit r lässt sich gemäß folgender Gleichung beschreiben, worin $p_{\ddot{U}}$ der aktuelle im Vorratsbehälter vorliegende Überdruck, T die aktuelle im Vorratsbehälter vorliegende Temperatur und $p_D$ der (temperaturabhängige) Dampfdruck von Wasser bedeuten. Diese Parameter werden in Bezug zu einem Referenzpunkt (definiert durch den Referenzdruck ($p_{Ref}$), die Referenztemperatur ($T_{Ref}$) und die relative Referenzluftfeuchtigkeit r($p_{Ref}$,$T_{Ref}$)) gesetzt, der den Zustand der Luft bei Austritt aus der Klimaanlage bzw. aus einer alternativen oder zusätzlichen Entfeuchtungseinrichtung beschreibt. (Da bevorzugt die Luft vor Eintritt in den Vorratsbehälter mit Hilfe eines Kompressors verdichtet wird, strömt sie mit einer höheren Temperatur und einem höheren Druck in den Vorratsbehälter ein.) Durch die Definition des Referenzpunktes lässt sich die im Vorratsbehälter vorliegende Wassermenge genau quantifizieren.

$$r(p_{\mathrm{Re}f} + p_{\ddot{U}}, T) = \left(1 + \frac{p_{\ddot{U}}}{p_{\mathrm{Re}f}}\right) \cdot \frac{p_D(T_{\mathrm{Re}f})}{p_D(T)} \cdot r(p_{\mathrm{Re}f}, T_{\mathrm{Re}f}) \leq 100\%$$

**20**

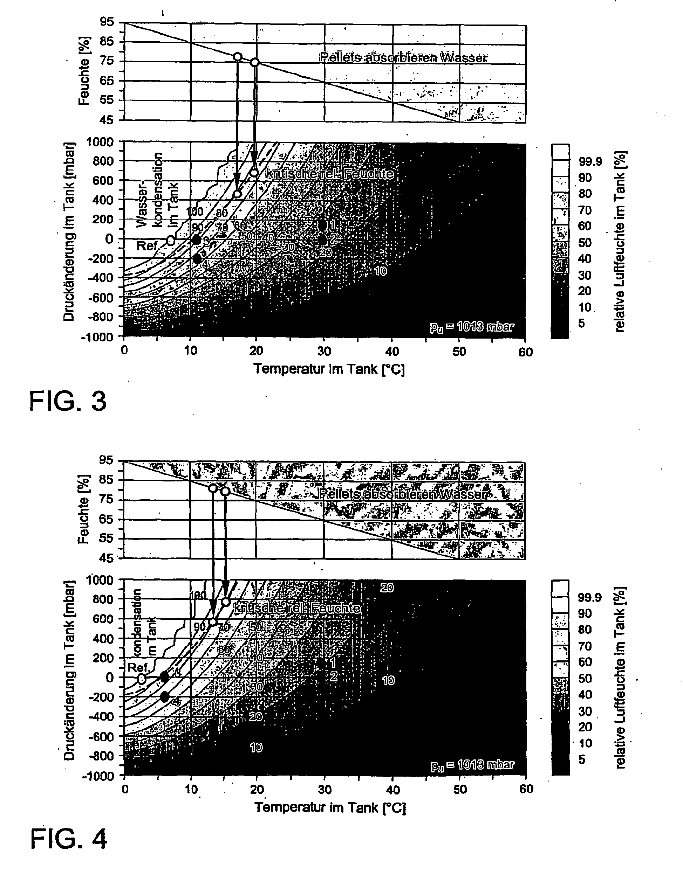

Figur 3 zeigt die relative Luftfeuchtigkeit im Vorratsbehälter in Abhängigkeit von der Temperatur T und dem Druck $p_{\ddot{U}}$ unter der Voraussetzung, dass die von der Klimaanlage kommende Luft eine Temperatur $T_{Ref}$ von 8 °C, einen Druck $p_{Ref}$ von 1013 mbar und eine relative Luftfeuchtigkeit r($p_{Ref}$, $T_{Ref}$) von 100 % aufweist. Dieser Referenzpunkt (Ref.) ist im unteren Diagramm gekennzeichnet. Damit beschreibt Figur 3 die maximal mögliche relative Luftfeuchtigkeit im Vorratsbehälter. Liegt die Umgebungstemperatur unterhalb von 8 °C, besitzt die in den Vorratsbehälter einströmende Luft eine geringere relative Luftfeuchtigkeit als dargestellt. Die kritische relative Luftfeuchtigkeit ist in dem unteren Teil der Figur 3 durch eine unterbrochene Linie dargestellt. Bei einer Luftfeuchtigkeit oberhalb des temperaturabhängigen kritischen Wertes adsorbiert Harnstoff Wasser. Oberhalb von einer relativen Luftfeuchtigkeit von 100 % findet eine Kondensation von Wasser im Vorratsbehälter statt. Durch die mit den Ziffern 1 bis 4 bezeichneten Punkte sind beispielhafte Zustände der Luft im Vorratsbehälter bezeichnet, wie sie in typischen Betriebssituationen vorkommen. Punkt 1 zeigt den Zustand der Luft beim Betrieb des Abgassystems, bei dem ein Überdruck im Vorratsbehälter vorliegt. Wird das Fahrzeug abgestellt, stellt sich kurzfristig wieder der Umgebungsdruck im Vorratsbehälter ein (Punkt 2) und anschließend findet eine Abkühlung auf Umgebungstemperatur statt (Punkt 3), wobei die relative Luftfeuchtigkeit stark ansteigt. Unterhalb von Temperaturen von etwa 11 °C beginnt der kritische Bereich. Obwohl durch die Versorgung des Vorratsbehälters 22 mit entfeuchteter Luft aus der Klimaanlage 30 bereits eine deutliche Verbesserung im Wege der Verschiebung des Taupunktes in Richtung niedrigerer Temperaturen erzielt wird, wird als weitere im Rahmen der vorliegenden Erfindung bevorzugte Maßnahme eine Druckabsenkung im Vorratsbehälter nach Abstellen der Verbrennungskraftmaschine durchgeführt (im gezeigten Beispiel um 200 mbar; Punkt 4). Die Druckabsenkung kann beispielsweise mit einer Vakuumpumpe oder einem saugseitig angeschlossenen Verdichter realisiert werde. Durch diese Maßnahme kann die relative Luftfeuchtigkeit unterhalb des kritischen Wertes abgesenkt werden, so dass in diesem Fall erst bei Umgebungstemperaturen unterhalb von etwa 6 °C der kritische Wert überschritten wird.

Um diese Situation noch weiter zu verbessern, wird in einer weiteren Ausführung die von der Klimaanlage 30 kommende Luft vor Eintritt in den Vorratsbehälter 22 noch weiter abgekühlt, wodurch eine weitere Entfeuchtung (Absenkung der spezifischen Luftfeuchtigkeit) realisiert wird. Bei einer Abkühlung der Luft auf 4 °C ergibt sich die gemäß Figur 4 dargestellte Situation (Referenzpunkt: $T_{Ref}$=4 °C, $p_{Ref}$=1013 mbar, r($p_{Ref}$, $T_{pef}$)=100 %). Es ist ersichtlich, dass die Luftkühlung vor Eintritt in den Vorratsbehälter eine deutliche Verschiebung des Taupunktes und auch der kritischen relativen Luftfeuchtigkeit für die Wasseradsorption von Harnstoff in Richtung niedrigerer Temperaturen bewirkt. Wird auch hier wiederum eine Druckabsenkung im Vorratsbehälter bei Abstellen der Verbrennungskraftmaschine vorgenommen, kann eine Verschiebung des kritischen Bereichs auf unter 0 °C erzielt werden (Punkt 4).

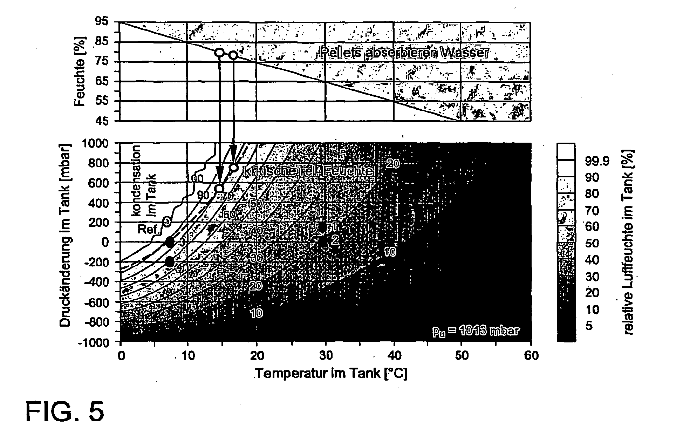

Ein ähnlicher Effekt wird erzielt, wenn statt der Luftkühlung eine Druckerhöhung der von der Klimaanlage 30 kommenden Luft vor Eintritt in den Vorratsbehälter 22 durchgeführt wird und somit eine weitere Entfeuchtung (Absenkung der spezifischen Luftfeuchtigkeit) realisiert wird. Bei einer Druckerhöhung um 200 mbar auf 1213 mbar ergibt sich die gemäß Figur 5 dargestellte Situation (Referenzpunkt: $T_{Ref}$=8 °C, $p_{Rer}$=1213 mbar, r($p_{Ref}$, $T_{Ref}$)=100 %).

In bevorzugter Ausgestaltung kann die Maßnahme der Luftkühlung nach Figur 4 mit der Maßnahme der Druckerhöhung nach Figur 5 miteinander kombiniert werden, so dass der Taupunkt und die für die Wasseradsorption von Harnstoff kritische relative Luftfeuchtigkeit noch weiter zu niedrigeren Temperaturen verschoben wird (nicht dargestellt).

Die in den vorausgegangenen Ausführungsbeispielen vorgestellten Maßnahmen sind mit dem Nachteil eines zusätzlichen Energieaufwandes und damit Kraftstoffverbrauchs verbunden. Dieser Mehraufwand kann minimiert werden, indem nur derjenige der Klimaanlage 30 entnommene Luftteilstrom weiter entfeuchtet wird, der für den Betrieb des Dosier- und Fördersystems 18, insbesondere des Vorratsbehälters 22, genutzt wird.

Eine im Rahmen der vorliegenden Erfindung bevorzugte zusätzliche Maßnahme zur Reduzierung der Luftfeuchtigkeit der mit dem Harnstoff in Kontakt kommenden Luft stellt der Einsatz von Adsorptionsmitteln dar und ist in alternativen Ausführungen in den Figuren 2A-C gezeigt. Dabei stellen Figuren 2A und 2B Beispiele dar, in denen das Adsorptionsmittel 32 in einer, den Vorratsbehälter 22 versorgenden Bypassleitung 34 des Dosier- und Fördersystems 18 angeordnet ist und damit nur die in den Vorratsbehälter 22 strömende Luft entfeuchtet. Die wiederum bevorzugt aber nicht notwendig von der Klimaanlage 30 kommende Luft wird über eine Pumpe 36 gefördert und kann wahlweise durch eine Förderleitung 38 oder die Bypassleitung 34 geleitet werden. Ein in der Bypassleitung 34 angeordnetes Sperrventil 40 kann dabei die Bypassleitung verschließen, so dass der Luftstrom ausschließlich durch die Förderleitung 38 gefördert wird. Alternativ oder zusätzlich kann - wie in Figur 2A dargestellt ist - ein Drei-Wege-Ventil 42 den Luftstrom wahlweise in die Bypassleitung 34 oder die Förderleitung 38 lenken oder in beide gleichzeitig. In der in Figur 2C gezeigten Ausführung ist das Adsorptionsmittel 32 im Vorratsbehälter 22 selbst angeordnet, beispielsweise in luftdurchlässigen Kartuschen.

In allen dargestellten Ausführungen ist in der Förderleitung 38 ein Zellenrad 44 vorgesehen, das in bekannter Weise der Dosierung und Förderung der Harnstoff-Pellets dient, indem diese von offenen Zellen erfasst und gefördert werden. Ein in der Förderleitung 38 vorgesehenes Ventil 46 dient der Absperrung des Vorratsbehälters 22 von dem nachgeschalteten Ammoniak-Reaktor 24 beziehungsweise dem Abgaskanal 12. Alternativ oder zusätzlich kann eine Absperrung durch Modifizierung des Zellenrades 44 erfolgen, indem mindestens eine der radial über den Umfang des Rades angeordneten Zellen verschlossen werden. Die Absperrung durch das Ventil 46 oder das durch Verschlusszellen modifizierte Zellenrad 44 dient nicht nur der Vermeidung des Luftaustausches, sondern ermöglicht auch den Erhalt des insbesondere abgesenkten Druckniveaus nach Abstellen der Verbrennungskraftmaschine 10.

Alle drei in den Figuren 2A bis C gezeigten Ausführungen ermöglichen einen diskontinuierlichen Einsatz des Adsorptionsmittels, indem jeweils nur die dem Vorratsbehälter 22 zuströmende Luft getrocknet wird. Insbesondere wird dabei nur die zum Druckaufbau im Vorratsbehälter 22 erforderliche Luft getrocknet, was vorzugsweise jeweils nur beim Fahrzeugstart erfolgt. Auf diese Weise wird ein höchsteffizienter Einsatz des Adsorptionsmittels 32 erreicht, so dass seine begrenzte Speicherkapazität für Wasser bestmöglich genutzt wird.

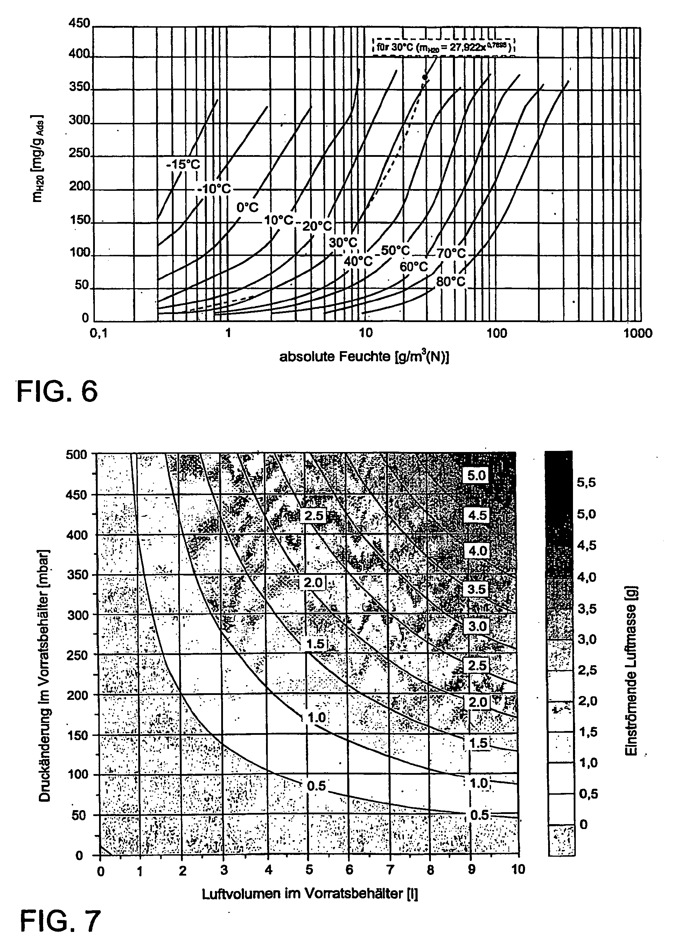

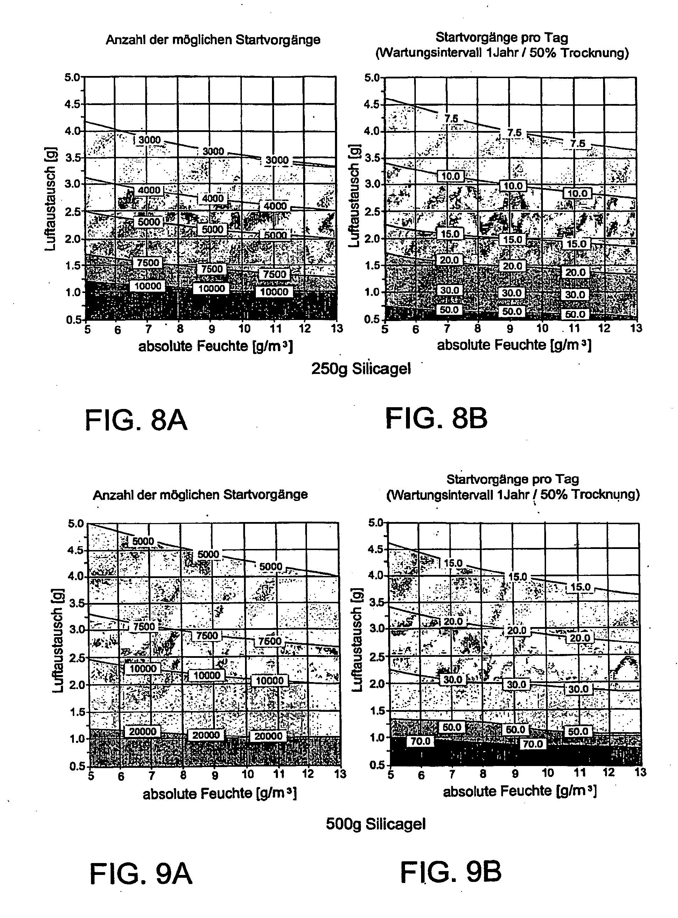

Als Adsorptionsmittel 32 kommen beispielsweise Molekularsiebe, Silicagel oder Aktivkohle in Frage. Auch Mischungen verschiedener Adsorptionsmittel 32 sind denkbar. Die Auslegung der erforderlichen Menge des Adsorptionsmittels 32 hängt von einer Reihe von Faktoren ab, insbesondere dessen spezifische Adsorptionsfähigkeit, das Volumen des Vorratsbehälters 22 und die Länge der Inspektionsintervalle. Nachfolgend soll eine solche Abschätzung für Silicagel exemplarisch erfolgen. Figur 6 zeigt die hierfür herangezogenen Adsorptionsisothermen von Silicagel in Abhängigkeit von der absoluten Luftfeuchtigkeit. Als Näherung lässt sich beispielsweise die Adsorption bei 30 °C mit der in Figur 6 gezeigten Gleichung ermitteln. Außerdem muss das von dem Pellet-Füllstand im Vorratsbehälter 22 abhängige, mit Luft zu befüllende Volumen des Vorratsbehälters 22 berücksichtigt werden, um das bei Druckänderung einströmende Luftvolumen zu ermitteln. Aus Figur 7 ist beispielsweise ersichtlich, dass bei 7 Litern freiem Volumen des Vorratsbehälters 22 und einer Druckänderung von 250 mbar etwa 2 g zu trocknende Luft einströmen. Aus den Adsorptionsisothermen aus Figur 6, dem zu befüllenden Volumen nach Figur 7 und der Länge der Inspektionsintervalle kann ermittelt werden, wie viele Startvorgänge mit einer bestimmten Menge Silicagel durchgeführt werden können. So zeigt Figur 8A die absolute Anzahl möglicher Startvorgänge bei einem Einsatz von 250 g Silicagel in Abhängigkeit von der absoluten (spezifischen) Luftfeuchtigkeit und dem zur Befüllung des Vorratsbehälters 22 erforderlichen Luftvolumen. Daraus leiten sich die Anzahl von Startvorgängen pro Tag bei einem angenommenen Inspektionsintervall von einem Jahr ab (Figur 8B). Für die Kalkulation wurde ein Wirkungsgrad der Trocknung von 50 % bei 30 °C vorausgesetzt. In Figur 9A und 9B sind die gleichen Größen für eine Beladung mit 500 g Silicagel dargestellt. Es ist erkennbar, dass bereits mit einer Silicagel-Beladung von 250 g realistische Werte erreicht werden und mit 500 g bereits ein guter Puffer gewährleistet werden kann.

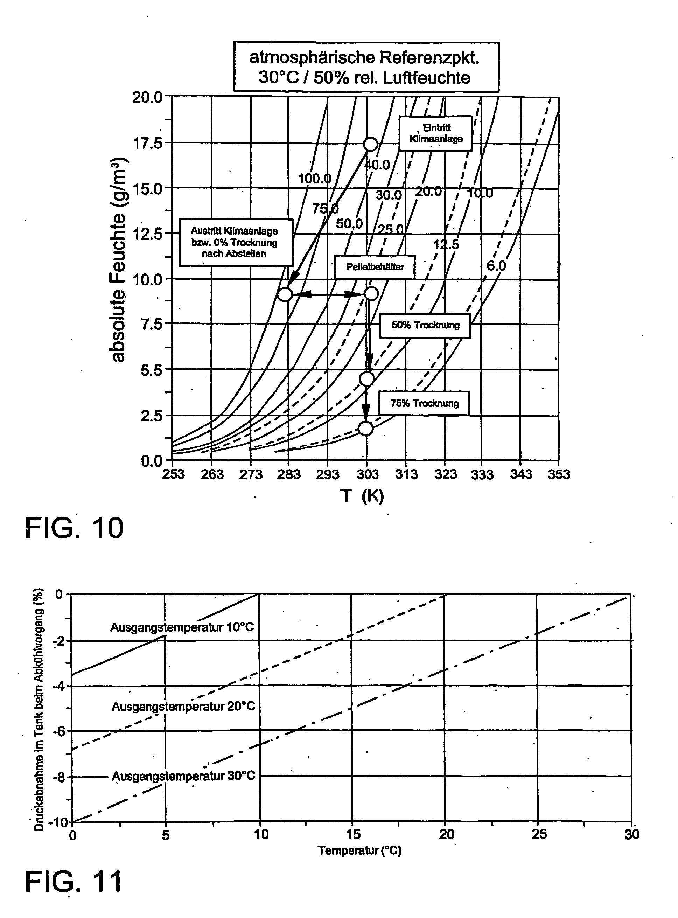

In Figur 10 ist dargestellt, wie sich die relative Luftfeuchtigkeit im Vorratsbehälter 22 absenken lässt, wenn die durch die Fahrzeugklimaanlage 30 konditionierte Luft zur Befüllung des Vorratsbehälters 22 eingesetzt wird und eine weitere Trocknung durch Einsatz von Silicagel als Adsorptionsmittel vorgenommen wird. Auch hier wird wieder eine Temperatur von 8 °C, ein Druck von 1013 mbar und eine relative Luftfeuchtigkeit von 100 % der Luft beim Austritt aus der Klimaanlage vorausgesetzt.

Die bisher vorgestellten Maßnahmen zielen auf eine Reduzierung der Feuchtigkeitsmenge ab, die über den Luftaustausch im Wege des Druckausgleichs in den Vorratsbehälter 22 für Harnstoff eindringt. Wie bereits erläutert wurde, kann durch Absenkung des Drucks (beispielsweise durch einen vorhandenen Förderluftkompressor) eine weitere Reduzierung der relativen Luftfeuchtigkeit im Vorratsbehälter 22 erzielt werden und mit einer geeigneten Ventilschaltung gehalten werden. In diesem Zusammenhang ist bevorzugt vorgesehen, einen Temperatur- und Feuchtigkeitsfühler im Vorratsbehälter 22 anzuordnen. In diesem Fall kann bedarfsweise, wenn die für die Wasseraufnahme kritische Luftfeuchtigkeit überschritten wird, die Druckabsenkung durchgeführt werden. Alternativ oder zusätzlich kann die Druckabsenkung auch bei jedem Fahrzeugstillstand erfolgen. Hier wirkt sich zusätzlich positiv aus, dass das Druckniveau nach Druckabsenkung durch den Abkühlvorgang bei Stillstand noch weiter absinkt. Dieser Zusammenhang ist in Figur 11 dargestellt. So fällt der Druck bei einer Ausgangtemperatur im Vorratsbehälter von 30 °C und einer nachfolgenden Abkühlung bei Abstellen des Fahrzeugs auf 15 °C um 5 % ab.

Eine weitere in Kombination der zuvor beschriebenen Maßnahmen vorteilhafte Maßnahme stellt die Vorerwärmung der dem Vorratsbehälter 22 und gegebenenfalls der dem Dosier- und Fördersystem 18 zuzuführenden Luft während des Betriebs dar. Dies kann beispielsweise durch Nutzung der Abwärme des Kühlwassers der Motorkühlung oder des Abgases erfolgen. Auf diese Weise kann die relative Luftfeuchtigkeit im Tank reduziert werden. Diese Maßnahme ist insbesondere vorteilhaft, wenn das System bei niedrigen Temperaturen in Betrieb genommen wird, da es in solchen Situationen durch den Druckanstieg im Vorratsbehälter 22 zu einer Kondensation von Wasser kommen kann.

Sämtliche der beschriebenen Maßnahmen können in Kombination miteinander eingesetzt werden, wobei sich die Effekte gegenseitig verstärken.

## Bezugszeichenliste

| | |
|---|---|
| 10 | Verbrennungskraftmaschine |
| 12 | Abgaskanal |
| 14 | SCR-Katalysatorsystem |
| 16 | SCR-Katalysator |
| 18 | Dosier- und Fördersystem |
| 20 | Zudosiereinheit |
| 22 | Vorratsbehälter |
| 24 | Ammoniak-Reaktor |
| 26 | Oxidationskatalysator |
| 28 | Motorsteuerung |
| 30 | Klimaanlage |
| 32 | Adsorptionsmittel |
| 34 | Bypassleitung |
| 36 | Pumpe |
| 38 | Förderleitung |
| 40 | Sperrventil |
| 42 | Drei-Wege-Ventil |
| 44 | Zellenrad |
| 46 | Ventil |

## Patentansprüche

1. Verfahren zum Betreiben eines SCR-Katalysatorsystems (14) für eine Verbrennungskraftmaschine (10) mit einem SCR-Katalysator (16), der geeignet ist, ein Reduktionsmittel zu speichern und unter dessen Beteiligung Stickoxide ($NO_x$) des Abgases zu reduzieren, wobei das Reduktionsmittel oder eine chemische Vorstufe von diesem in einem Vorratsbehälter (22) gelagert wird und von dort über ein Dosier- und Fördersystem (18) dem SCR-Katalysator (16) zugeführt wird, wobei zumindest ein Teilstrom einer in den Vorratsbehälter (22) einströmenden Luft derart konditioniert wird, dass zumindest die spezifische und optional zusätzlich die relative Luftfeuchtigkeit der Luft im Vorratsbehälter (22) abgesenkt wird,
**dadurch gekennzeichnet, dass**
die Absenkung der spezifischen Luftfeuchtigkeit durch Kühlung und/oder durch Kompression der Luft vor Eintritt in den Vorratsbehälter (22) bis zum Erreichen des Taupunktes der Luft erfolgt.

2. Verfahren nach Anspruch 1,
**dadurch gekennzeichnet, dass**
die Absenkung der spezifischen Luftfeuchtigkeit durch Entfeuchtung der Luft mittels Kondensation vor Eintritt in den Vorratsbehälter (22) erfolgt, insbesondere durch Versorgung des Vorratsbehälters (22) mit einer durch eine Klimaanlage (30) entfeuchteten Luft.

3. Verfahren nach einem der vorhergehenden Ansprüche,
**dadurch gekennzeichnet, dass**
die Absenkung der spezifischen Luftfeuchtigkeit zumindest zweistufig erfolgt, wobei zunächst die Luft durch eine Klimaanlage (30) entfeuchtet und anschließend vor ihrem Eintritt in den Vorratsbehälter (22) durch Kühlung und/oder durch Kompression weiter konditioniert wird.

4. Verfahren nach einem der vorhergehenden Ansprüche,
**dadurch gekennzeichnet, dass**
die Absenkung der spezifischen Luftfeuchtigkeit durch Einsatz eines Adsorptionsmittels (32) für Wasser, insbesondere eines Molekularsiebs, Einsatz von Silicagel, Aktivkohle, oder einer Mischung von diesen, erfolgt.

5. Verfahren nach einem, der vorhergehenden Ansprüche,
**dadurch gekennzeichnet, dass**
die Absenkung der relativen Luftfeuchtigkeit im Vorratsbehälter (22) durch Absenkung des Drucks und/oder Erhöhung der Temperatur im Vorratsbehälter (22) erfolgt.

6. Verfahren nach Anspruch 5,
**dadurch gekennzeichnet, dass**
bei ausgeschalteter Verbrennungskraftmaschine (10) der Druck im Vorratsbehälter (22) reduziert wird.

7. Verfahren nach einem der vorhergehenden Ansprüche,
**dadurch gekennzeichnet, dass**
die Konditionierung der Luft diskontinuierlich erfolgt, wobei insbesondere nur die bei einem Fahrzeugstart zum Druckausgleich im Vorratsbehälter (22) und/oder im Dosier- und Fördersystem (18) benötigte Luft behandelt wird.

8. Verfahren nach einem der vorhergehenden Ansprüche,
**dadurch gekennzeichnet, dass**
der Harnstoff in Form von Harnstoff-Pellets eingesetzt wird, der eine die Feuchtigkeitsadsorption von Harnstoff herabsetzende Beschichtung aufweist.

9. SCR-Katalysatorsystem (14) für eine Abgasanlage einer Verbrennungskraftmaschine (10) umfassend einen SCR-Katalysator (16), der geeignet ist, ein Reduktionsmittel zu speichern und unter dessen Beteiligung Stickoxide $NO_x$ des Abgases zu reduzieren; einen Vorratsbehälter (22) zur Lagerung des Reduktionsmittels oder einer chemischen Vorstufe von diesem; ein Dosier- und Fördersystem (18) zur Zuführung des Reduktionsmittels oder seiner chemischen Vorstufe zu dem SCR-Katalysator (16); und Mittel zur Konditionierung zumindest eines Teilstroms einer in den Vorratsbehälter (22) einströmenden Luft derart, dass zumindest die spezifische und optional zusätzlich die relative Luftfeuchtigkeit der Luft abgesenkt wird,
**dadurch gekennzeichnet, dass**
die Mittel zur Konditionierung der Luft ausgebildet sind, durch Kühlung und/oder durch Kompression der Luft bis zum Erreichen des Taupunktes der Luft vor Eintritt in den Vorratsbehälter (22) die Absenkung der spezifischen Luftfeuchtigkeit zu bewirken.

**Claims**

1. Method for operating an SCR catalytic converter system (14) for an internal combustion engine (10), having an SCR catalytic converter (16) which is suitable for storing a reducing agent and, with the participation of said reducing agent, reducing nitrogen oxides ($NO_x$) of the exhaust gas, with the reducing agent or a chemical precursor of said reducing agent being stored in a reservoir (22) and being supplied from there to the SCR catalytic converter (16) by means of a dosing and feed system (18), with at least a partial flow of air flowing into the reservoir (22) being conditioned such that at least the specific and optionally additionally the relative air humidity of the air in the reservoir (22) is reduced,
**characterized in that**
the specific air humidity is reduced by virtue of the air being cooled and/or compressed until the dew point of the air is reached before said air enters into the reservoir (22).

2. Method according to Claim 1,
**characterized in that**
the specific air humidity is reduced by virtue of the air being dehumidified by means of condensation before said air enters into the reservoir (22), in particular by virtue of air which has been dehumidified by means of an air-conditioning system (30) being supplied to the reservoir (22).

3. Method according to one of the preceding claims,
**characterized in that**
the specific air humidity is reduced at least in two stages, with the air firstly being dehumidified by means of an air-conditioning system (30) and subsequently being conditioned further by cooling and/or by compression before it enters into the reservoir (22).

4. Method according to one of the preceding claims,
**characterized in that**
the specific air humidity is reduced through the use of an adsorption means (32) for water, in particular a molecular sieve, using silica gel, activated carbon or a mixture of these.

5. Method according to one of the preceding claims,
**characterized in that**
the relative air humidity in the reservoir (22) is reduced by virtue of the pressure in the reservoir (22) being reduced and/or the temperature in the reservoir (22) being increased.

6. Method according to Claim 5,
**characterized in that,**
when the internal combustion engine (10) is switched off, the pressure in the reservoir (22) is reduced.

7. Method according to one of the preceding claims,
**characterized in that**
the air is conditioned discontinuously, with in particular only the air required during a vehicle start for pressure compensation in the reservoir (22) and/or in the dosing and feed system (18) being treated.

8. Method according to one of the preceding claims,
**characterized in that**
the urea is used in the form of urea pellets which have a coating which reduces the moisture adsorption of urea.

9. SCR catalytic converter system (14) for an exhaust
system of an internal combustion engine (10), comprising an SCR catalytic converter (16) which is suitable for storing a reducing agent and, with the participation of said reducing agent, reducing nitrogen oxides $NO_x$ of the exhaust gas; a reservoir (22) for storing the reducing agent or a chemical precursor of said reducing agent; a dosing and feed system (18) for supplying the reducing agent or its chemical precursor to the SCR catalytic converter (16); and means for conditioning at least a partial flow of air flowing into the reservoir (22) such that at least the specific and optionally additionally the relative air humidity of the air is reduced, **characterized in that**
the means for conditioning the air are designed to reduce the specific air humidity by cooling and/or compressing the air until the dew point of the air is reached before said air enters into the reservoir (22).

**Revendications**

1. Procédé pour faire fonctionner un système de catalyseur SCR (14) pour un moteur à combustion interne (10) comprenant un catalyseur SCR (16), qui est approprié pour stocker un agent réducteur et pour réduire, par son action, les oxydes d'azote ($NO_x$) des gaz d'échappement, l'agent réducteur ou un précurseur chimique de celui-ci étant stocké dans un réservoir (22), et étant acheminé de celui-ci par le biais d'un système de dosage et d'alimentation (18) au catalyseur SCR (16), au moins un courant partiel d'air s'écoulant dans le réservoir (22) étant conditionné de telle sorte qu'au moins l'humidité de l'air spécifique et en option aussi relative de l'air dans le réservoir (22) soit réduite,
**caractérisé en ce que**
la réduction de l'humidité spécifique de l'air est effectuée par refroidissement et/ou par compression de l'air avant l'entrée dans le réservoir (22) jusqu'à l'obtention du point de condensation de l'air.

2. Procédé selon la revendication 1,
**caractérisé en ce que**
la réduction de l'humidité spécifique de l'air est effectuée par déshydratation de l'air au moyen d'une condensation avant l'entrée dans le réservoir (22), en particulier en alimentant le réservoir (22) en air déshumidifié par une installation de climatisation (30) .

**3.** Procédé selon l'une quelconque des revendications précédentes,
**caractérisé en ce que**
la réduction de l'humidité spécifique de l'air est effectuée au moins en deux étapes, l'air étant d'abord déshumidifié par une installation de climatisation (30), puis, avant son entrée dans le réservoir (22), étant conditionné davantage par refroidissement et/ou compression.

**4.** Procédé selon l'une quelconque des revendications précédentes,
**caractérisé en ce que**
la réduction de l'humidité spécifique de l'air est effectuée en utilisant un agent d'adsorption (32) pour l'eau, notamment un tamis moléculaire, par l'utilisation d'un gel de silice, de charbon actif, ou d'un mélange de ceux-ci.

**5.** Procédé selon l'une quelconque des revendications précédentes,
**caractérisé en ce que**
la réduction de l'humidité relative de l'air dans le réservoir (22) s'effectue par réduction de la pression et/ou augmentation de la température dans le réservoir (22).

**6.** Procédé selon la revendication 5,
**caractérisé en ce que**
lorsque le moteur à combustion interne (10) est coupé, la pression dans le réservoir (22) est réduite.

**7.** Procédé selon l'une quelconque des revendications précédentes,
**caractérisé en ce que**
le conditionnement de l'air s'effectue de manière discontinue, notamment seulement l'air requis lors d'un démarrage du véhicule pour la compensation de pression dans le réservoir (22) et/ou dans le système de dosage et/ou d'alimentation (18) étant traité.

**8.** Procédé selon l'une quelconque des revendications précédentes,
**caractérisé en ce que**
l'urée est utilisée sous forme de granules d'urée, qui présentent un revêtement réduisant l'adsorption d'humidité de l'urée.

**9.** Système de catalyseur SCR (14) pour une installation de gaz d'échappement d'un moteur à combustion interne (10), comprenant un catalyseur SCR (16), qui est approprié pour stocker un agent réducteur et pour réduire, par son action, les oxydes d'azote ($NO_x$) des gaz d'échappement ;
un réservoir (22) pour stocker l'agent réducteur ou un précurseur chimique de celui-ci ; un dispositif de dosage et d'alimentation (18) pour acheminer l'agent réducteur ou son précurseur chimique au catalyseur SCR (16), et des moyens pour conditionner au moins un courant partiel d'air s'écoulant dans le réservoir (22), de telle sorte qu'au moins l'humidité spécifique et en option aussi relative de l'air soit réduite,
**caractérisé en ce que**
les moyens de conditionnement de l'air sont réalisés pour effectuer la réduction de l'humidité spécifique de l'air par refroidissement et/ou par compression de l'air jusqu'à l'obtention du point de condensation de l'air avant l'entrée dans le réservoir (22).

**FIG. 1**

**FIG. 2A**

**FIG. 2B**

**FIG. 2C**

FIG. 3

FIG. 4

FIG. 5

FIG. 6

FIG. 7

Anzahl der möglichen Startvorgänge

Startvorgänge pro Tag
(Wartungsintervall 1Jahr / 50% Trocknung)

250g Silicagel

FIG. 8A                    FIG. 8B

Anzahl der möglichen Startvorgänge

Startvorgänge pro Tag
(Wartungsintervall 1Jahr / 50% Trocknung)

500g Silicagel

FIG. 9A                    FIG. 9B

EP 2 061 957 B1

FIG. 10

FIG. 11

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10251498 A
- DE 102004029387 A
- DE 102004042225 A
- EP 1048340 A